# EUROPEAN PATENT APPLICATION

(11) **EP 2 495 980 A1**
(43) Date of publication of application: **05.09.2012**
(21) Application number: 11305224.5
(22) Date of filing: 02.03.2011
(51) Int. Cl.: H04N 13/00

(54) **System and method for capturing a stereoscopic dataset**

(71) Applicant: Thomson Licensing, 92130 Issy-les-Moulineaux (FR)
(72) Inventor: Winter, Marco, 30659, Hannover (DE)
(74) Representative: Schmidt-Uhlig, Thomas

(57) **Abstract**

A method for capturing a stereoscopic dataset of an object (4) using a stereoscopic pair of cameras (14, 18) that is moveable with respect to the object (4), the method comprising the steps of capturing a first pair of stereoscopic images at a first capturing position (P2) of a first camera (camA1, camB1) of the stereoscopic pair of cameras (14, 18), moving the stereoscopic pair of cameras (14, 18) relative to the object (4) along a trajectory (2), wherein both, the first and a second camera (camA1, camA2, camB1, camB2) of the stereoscopic pair of cameras (14, 18), follow the trajectory (2), determining a position of the second camera (camA2, camB2), and, if the second camera is in the first capturing position (P2), capturing a second pair of stereoscopic images.

## Description

### FIELD OF THE INVENTION

The invention relates to a system for capturing a stereoscopic dataset and further to a method for capturing a stereoscopic dataset.

### BACKGROUND OF THE INVENTION

3D reconstruction or 3D digitization of a row of houses inside a city or of a landscape is a challenging task. For a stereoscopic 3D visualization of the captured scene the disparities between the different views of a captured stereoscopic dataset need to be extracted. One application for stereoscopic image acquisition is the generation of a 3D model of a scene, e.g. a 3D model of a street or a complete city. In order to generate a 3D model of, for example, a couple of houses, a sequence of stereoscopic images is captured along the street. There are several methods available to perform disparity extraction from stereoscopic images. A 3D reconstruction may be performed using still images that have been captured from different viewing directions as well as from a 2D video that has be captured when moving along the street or landscape. Both methods have advantages and disadvantages. While a set of 2D video frames usually misses the exact camera position, a stereoscopic camera typically takes a very low number of pictures from the same object and, therefore, there is only a small amount of data that may be used for calculation of the disparities. Especially systems comprising only two cameras provide a low number of stereoscopic images of a scene and accordingly the depth map offers a limited quality. However, even multi-view cameras do not provide enough pictures and, consequently, the quality of the resulting depth or disparity map is also rather low. A further disadvantage of a method using still pictures is that moving objects, e.g. a person walking along a street of a city, are difficult to identify and, accordingly, it is also difficult to eliminate these moving objects from the captured scene and the resulting 3D model.

### SUMMARY

It is an object of the present invention to provide a method for capturing a stereoscopic dataset and a system for capturing a stereoscopic dataset that are improved with respect to the deficiencies in the prior art.

According to a first aspect of the invention, a method for capturing a stereoscopic dataset is provided. A stereoscopic pair of cameras is used, which is movable with respect to the object. The method comprises the steps of capturing a first pair of stereoscopic images at a first capturing position of a first camera of the stereoscopic pair of cameras and moving the stereoscopic pair of cameras relative to the object along a trajectory. Both, the first as well as the second camera of the stereoscopic pair of cameras follow the trajectory. According to a further step of the method, a position of the second camera is determined. If the second camera is in the first capturing position, a second pair of stereoscopic images is captured.

The method according to the invention has the advantage that a 2D sequence for temporal disparity extraction and a stereoscopic stream of pictures for a conventional stereoscopic disparity extraction is provided. By comparing the camera shots of the first and second camera, i.e. the picture taken by the first camera at the first capturing position and the picture of the second camera captured at the same position, it is easy to distinguish the static 3D scenery from moving 3D objects. This is because the two camera shots are taken from the same absolute camera position, namely the first capturing position, and have the same viewing direction, but they are taken at different points in time. In other words, the cameras are placed sequentially and pictures are captured during the movement of the stereoscopic pair of cameras. The second camera will arrive at the first capturing position with a certain time delay. Since the cameras are synchronized with respect to their absolute position, i.e. the second camera takes a shot if it is located in the first capturing position previously held by the first camera, the two shots are captured from the same absolute position but at different points in time. This synchronization with respect to the absolute camera position is achieved using a positioning system. The cameras are not triggered at a fixed frequency, but instead they are triggered by their absolute position.

As a result, the quality of the disparity map is improved, since a high number of camera pictures is taken when moving along an object. Further, moving objects may be extracted from the 3D scenery.

According to another aspect of the invention, the method of capturing a stereoscopic dataset further comprises the step of capturing further pairs of stereoscopic images at further capturing positions of the first camera. These camera shots are taken before the second camera reaches the first capturing position. Further, a position of the second camera is determined and, if the second camera is in one of the aforementioned further capturing positions, a further second pair of stereoscopic images is captured. Preferably, the stereoscopic cameras have a fixed base distance to each other and the further pairs of stereoscopic images are captured at a position of the first camera that is defined by the first capturing position plus a fractional amount of said base distance. For exemple, an additional picture is taken if the first camera moves along the trajectory and reaches one half of the base distance between the stereoscopic pair of cameras. This example may be extended to further camera positions and further additional shots, e.g. at one third and at two thirds of the respective base distance. This allows to further increase the density of the captured pictures while leaving the base distance between the stereoscopic cameras at a constant value.

According to another advantageous embodiment of the invention, an optical axis of the stereoscopic pair of cameras is aligned perpendicularly to the trajectory. The stereoscopic pair of cameras is arranged to capture a scene that is located left or right or - if the stereoscopic pair of cameras is directed to the sky - above the trajectory. The perpendicular alignment of the stereoscopic pair of cameras is advantageous for the disparity extraction algorithm.

According to still another aspect of the invention, a system for capturing a stereoscopic dataset of a fixed object is provided. The system comprises a movable carrier, a stereoscopic pair of cameras that is mounted on the carrier and a positioning system for determining a position of the first and second camera. The carrier is capable of moving along the trajectory, wherein a base between the first and second camera is oriented parallel to the trajectory. The system allows to capture a stereoscopic dataset having a high quality since the optical axis of the stereoscopic pair of cameras is always aligned perpendicularly to the trajectory. This is advantageous for the disparity extraction algorithm. Further advantages of the system for capturing a stereoscopic dataset have already been mentioned with reference to the method according to the invention and do apply to the system in a same or similar way. According to another advantageous embodiment, the carrier is a wheeled vehicle having a steering axle, wherein the stereoscopic pair of cameras is mounted to the vehicle at a position that is vertically above the steering axle. This position of the stereoscopic pair of cameras leads to a high consistency between the first and second camera position and the trajectory even if the vehicle has to perform a lot of steering actions, e.g. in small cities.

According to a further advantageous embodiment, the camera rig, i.e. the base between the first and second camera of the stereoscopic pair of cameras, is rotatable. The rotation is synchronized to the vehicle's wheels or the steering axle. This improves the consistency between the position of the first and second camera and the trajectory.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: is a schematic top view illustrating a method of capturing a stereoscopic dataset according to an embodiment of the invention,
- Fig. 2: is a simplified top view illustrating a position of a first and a second camera of a stereoscopic pair of cameras during different points in time according to a further embodiment of the invention,
- Fig. 3: is a further simplified top view illustrating a position of a first and a second camera of a stereoscopic pair of cameras during different points in time according to yet another embodiment of the invention, and
- Fig. 4: is a simplified side view of a system for capturing a stereoscopic dataset, wherein a wheeled vehicle is exemplarily used as a carrier, according to another embodiment of the invention.

### DETAILED DESCRIPTION OF AN EXAMPLARY EMBODIMENT

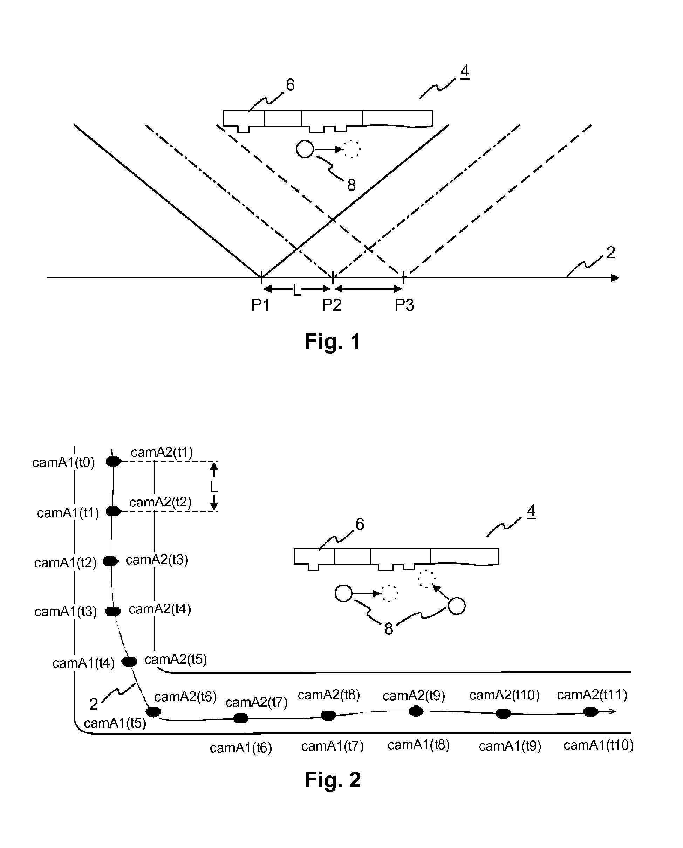

Fig. 1 is a simplified top view showing a trajectory 2 for moving along a stereoscopic pair of cameras. There are different positions, namely P1 to P3 that are successively taken up by a first and a second camera of the stereoscopic pair of cameras. A respective viewing angle is schematically illustrated by straight, dash-dotted and dashed lines. All viewing angles embrace a 3D scenery 4. This exemplary 3D scenery 4 comprises static objects 6, e.g. a row of houses, and a moving object 8, e.g. a person walking along the street. At a first point in time the moving object 8 is at a position indicated by the straight line. At a later point in time the moving object has shifted to a position that is illustrated by the dashed line.

The stereoscopic pair of cameras moves along the trajectory 2. At a first point in time, namely at t1, the first camera is located at position P2. The distance between the capturing position P1 and P2 is the base length L between the first and the second camera of the stereoscopic pair of cameras. Accordingly, at t1 the second camera is located at position P1. A first stereoscopic pair of images is captured at t1. The first camera has a viewing angle that is illustrated by the dash-dotted line and the second camera has a viewing angle depicted by the straight line. At t1, the moving object 8 is assumed to be at the position indicated by the straight line. Accordingly, a 3D scene comprising the fixed objects 6 and the moving object 8 at the position indicated by the straight line is captured.

Subsequently, the stereoscopic pair of cameras moves along the trajectory 2. At a later point in time, namely at t2, the first camera reaches position P3 and the second camera is at position P2. Now, the first camera has a viewing angle that is indicated by the dashed line and the second camera has a viewing angle that is indicated by the dash-dotted line. During the time span t2-t1 the moving object 8 has moved from the position indicated by the straight line to the position indicated by the dashed line. Accordingly, a 3D scene 4 comprising the identical static object 6, e.g. the same row of houses but a shifted moving object 8 is captured. When comparing the image of the first camera taken from position P2 at t1 and the image of the second camera also taken from P2 but later, namely at t2, the moving object 8 may be identified as such. Accordingly, the moving object 8 may be removed from the static scene and a clear 3D reconstruction of the fixed object 6 is possible.

The first camera and the second camera are synchronized with respect to their absolute position. In other words, the second camera takes a picture at the same absolute position as the first camera did before. A positioning system, e.g. a GPS system that may further take into account the position or the speed of a carrier, triggers the shutter of the cameras.

Fig. 2 illustrates this mechanism. The position of the first camera camA1 at t0 is equal to the position of the second camera camA2 at t1. The distance between the first and second capturing positions is the base distance L. A 2D sequence for temporal disparity extraction and a stereoscopic stream of pictures for conventional stereoscopic disparity extraction are provided when the stereoscopic pair of cameras moves along the trajectory 2. Moving objects 8 may be distinguished from fixed object 6 when capturing the 3D scenery 4. The camera duo provides a stereoscopic video sequence as well as camera captures from the same position having a time delay that depends on the speed of the carrier only.

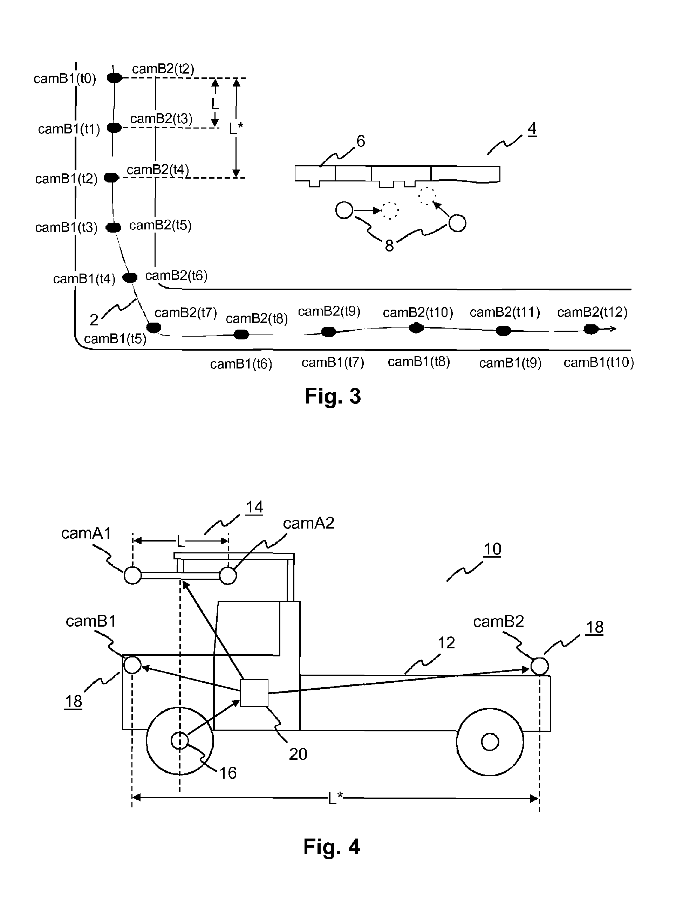

Fig. 3 illustrates a further embodiment for a method of capturing a stereoscopic dataset. The camera distance L has been doubled to the base length L*, but the absolute density of the camera shots has been kept. While according to the embodiment in Fig. 2 the capturing positions a spaced apart by a full base length L, the capturing positions in Fig. 3 are spaced apart by half of the base length L*. The position of the first camera camB1 at t0 is equal to the position of the second camera camB2 at t2. Meanwhile, there is a shot at t1 at a position that is equal to half of the base distance L*. Again, frames that have been taken from the same absolute position may be compared and identical parts of the fixed object 6 that may be occluded in one of the frames, e.g. by moving objects, will generally be visible in the other frames. Objects differing from each other in the two pictures can easily be identified as moving objects 8, e.g. a pedestrian or a moving car.

Apart from identification of moving objects, pictures from the same viewing point that have been take at different moments might be very useful to simplify the disparity extraction. For example, the disparity extraction algorithms need lower artificial intelligence to distinguish between special lighting conditions (sunny, cloudy, reflections). Therefore, errors in the resulting disparity map or in the 3D reconstruction are reduced without additional processing power or artificial intelligence. Further, the disparity extraction needs less additional human assistance such that the resulting video sequences are suitable for every kind of reconstruction. A further advantage is that the size of the recorded stream depends on the driven track only and is independent from the speed of the carrier. Information about the position of the stereoscopic capturing system that is necessary for reconstruction of the 3D scene is favorably provided by a navigation system. Preferably this system uses all available sensors inside the carrier like wheel position, speed, GPS, compass etc.

The improved distinction between static and moving objects overcomes the disadvantage of disparity extraction that is based on 2D video sequences and disparity extraction that is based on stereoscopic shots. Even a disparity extraction process based on only one of both methods will be improved by the camera arrangement and the method according to embodiments of the invention.

Fig. 4 is a simplified view of a system 10 for capturing a stereoscopic dataset according to an embodiment. A wheeled vehicle, i.e. a truck 12, is taken as a carrier. Exemplarily, two stereoscopic systems, namely a first system 14 and a second system 18 are mounted to the truck 12. The first system 14 comprises the first camera camA1 and a second camera camA2 and is mounted at a position vertically above a steering axle 16 of the truck 12. The second system 18 is arranged to have a maximum base length L* and comprises a first camera camB1 and a second camera camB2. The truck 12 comprises a positioning system 20, which takes into account a GPS coordinate, the truck's speed, compass information, etc. A position of the cameras camA1, camA2, camB1, camB2 is calculated from the position of the truck 12 by taking into account the known position of the cameras camA1, camA2, camB1, camB2 on the truck 12.

Further, a steering angle of the steering axle 16 is preferably taken into account. The base L between the first and second camera camA1, camA2 of the first stereoscopic system 14 may be pivotable. The rotation of the base L around a vertical axis is synchronized with the movement of the steering axle 16 of the truck 12. Accordingly, the first stereoscopic system 14 provides an excellent accordance between the position of the first and second camera camA1, camA2 and the trajectory 2. The second stereoscopic system 18 provides a large base distance L* and is accordingly suitable for capture of long-distance scenes like landscapes or the like.

## Claims

1. A method for capturing a stereoscopic dataset of an object using a stereoscopic pair of cameras (14, 18) that is moveable with respect to the object (4), the method **comprising** the steps of:
a) capturing a first pair of stereoscopic images at a first capturing position (P2) of a first camera (camA1, camB1) of the stereoscopic pair of cameras (14, 18),
b) moving the stereoscopic pair of cameras (14, 18) relative to the object (4) along a trajectory (2), wherein both, the first and a second camera (camA1, camA2, camB1, camB2) of the stereoscopic pair of cameras (14, 18), follow the trajectory (2),
c) determining a position of the second camera (camA2, camB2), and, if the second camera (camA2, camB2) is in the first capturing position (P2),
d) capturing a second pair of stereoscopic images.

2. The method according to claim 1, **further** comprising the steps of:
a) capturing further pairs of stereoscopic images at further capturing positions of the first camera (camA1, camB1), before the second camera (camA2, camB2) reaches the first capturing position (P2),
b) determining a position of the second camera (camA2, camB2), and, if the second camera (camA2, camB2) is in one of the further capturing positions of the first camera (camA1, camB1),
c) capturing a further second pair of stereoscopic images.

3. The method according to claim 2, **wherein** the stereoscopic cameras (camA1, camA2, camB1, camB2) have a base distance (L, L*) to each other and the further pairs of stereoscopic images are captured at a position of the first camera (camA1, camB1) that is defined by the first capturing position (P2) plus a fractional amount of the base distance (L, L*) between the stereoscopic cameras (camA1, camA2, camB1, camB2).

4. The method according to one of claims 1 to 3, **wherein** an optical axis of the stereoscopic pair of cameras (14, 18) is aligned perpendicularly to the trajectory (2).

5. A system (10) for capturing a stereoscopic dataset of an object (4), the system **comprising:**
- a moveable carrier (12),
- a stereoscopic pair of cameras (14, 18) that is mounted on the carrier (12), and
- a positioning system (20) for determining a position of a first and a second camera (camA1, camA2, camB1, camB2) of the stereoscopic pair of cameras (14, 18),
wherein the carrier (12) is capable of moving along a trajectory (2) and a base between the first and second camera (camA1, camA2, camB1, camB2) is oriented parallel to the trajectory (2).

6. The system (10) according to claim 5, **wherein** an optical axis of the stereoscopic pair of cameras (14, 18) is aligned perpendicularly to the trajectory (2).

7. The system (10) according to claim 5 or 6, **wherein** the carrier (12) is a wheeled vehicle having a steering axle (16) and the stereoscopic pair of cameras (14, 18) is mounted to the vehicle (12) at a position that is vertically above the steering axle (16).
